# EUROPÄISCHE PATENTANMELDUNG

(11) **EP 1 814 028 A1**
(43) Veröffentlichungstag der Anmeldung: **01.08.2007**
(21) Anmeldenummer: 06001746.4
(22) Anmeldetag: 27.01.2006
(51) Int. Cl.: G06F 9/50

(54) **Verfahren zum Implementieren von Applikationen in unabhängigen Partitionen mit optimierten Betriebsystemen**

(71) Anmelder: SIEMENS AKTIENGESELLSCHAFT, 80333 München (DE)
(72) Erfinder: Hünteler, Thomas, 81377 München (DE); Wenninger, Klaus, 2700 Wiener Neustadt (AT)

(57) **Zusammenfassung**

Eine Prozessorplattform (HW) einer prozessorgesteuerten Einrichtung (PC) ist derart ausgestaltet, dass unabhängige Partitionen (P1,P2) eingerichtet werden können, wobei einer Partition (P1,P2) ein Betriebssystem (OS1,OS2) und diesem zumindest eine Applikation (APP(OF,TEL)) zugeordnet ist. Das jeweilige Betriebssystem (OS1,OS2) ist hinsichtlich seines Funktionsumfangs für die jeweilige zumindest eine Applikation (APP(OF, TEL)) optimiert. Durch die Benutzung einer gemeinsamen Prozessorplattform (HW) und die Optimierung der Betriebssysteme (OS1,OS2) auf die Anforderungen der jeweiligen Applikation APP(OF,TEL)) wird eine besonders wirtschaftliche Realisierung erreicht, wobei in den Betriebssystemen (OS1,OS2) nur diejenigen Funktionen realisiert sind, die für den Betrieb der jeweiligen Applikation APP(OF,TEL)) erforderlich sind. Durch die Unabhängigkeit der Partitionen (P1,P2) wird zusätzlich gegenüber der bekannten Software-Lösung für Applikationen ein hohe Verfügbarkeit der Applikationen (APP(OF,TEL)) erreicht.

## Beschreibung

Einrichtungen wie Telefone, Kommunikationsanlagen oder unterhaltungs- oder computertechnischen Einrichtungen wie TV, Video oder Drucker usw. sind überwiegend durch prozessorgesteuerte Einrichtungen realisiert, die mit hoher Verfügbarkeit und Sicherheit ihren Service bereitstellen. Der Service ist hierbei jeweils durch eine Software gesteuert, die als Applikation in die jeweilige Einrichtung eingebracht ist. Jede der Einrichtungen ist hierbei mit der entsprechenden aufwändigen Umwelt wie Stromversorgung und Verkabelung auszustatten. Bei einer Integration einer Applikation oder mehrerer Applikationen in einen beispielsweise durch einen Personalcomputer realisierte Einrichtung wird aufgrund der nicht ständigen Betriebsbereitschaft des Personalcomputers auf die Verfügbarkeit und aufgrund der gegenseitigen Beeinflussungen der Applikationen auf die Sicherheit der jeweiligen Applikationen verzichtet.

Der Erfindung liegt die Aufgage zugrunde, die Realisierung von durch Applikationen gesteuerte unterhaltungs-, kommunikations- und computertechnischen Einrichtungen zu verbessern. Die Aufgabe wird durch die Merkmale der Ansprüche 1 und 8 gelöst.

Der wesentliche Aspekt der Erfindung ist darin zu sehen, dass eine Prozessorplattform einer prozessorgesteuerten Einrichtung derart ausgestaltet wird, dass unabhängige Partitionen eingerichtet werden können und einer Partition ein Betriebssystem und zumindest eine Applikation zugeordnet ist, wobei das Betriebssystem hinsichtlich seinen Funktionsumfangs auf die zumindest eine Applikation optimiert ist. Vorteilhaft sind die Applikationen durch unterhaltungs- oder telekommunikationsspezifische Applikationen realisiert.

Ein wesentlicher Vorteil der Erfindung ist darin zu sehen, dass die Applikationen völlig unabhängig voneinander mit Hilfe von separaten Betriebssystemen auf einer einzigen Prozessorplattform betrieben und gewartet werden können und unabhängig von einander aktiviert oder deaktiviert werden können. Dies bedeutet, dass die Applikationen robust und stabil betrieben werden können wie Applikationen, die in separaten prozessorgesteuerten Einrichtungen implementiert sind. Durch die Benutzung einer gemeinsamen Hardware-Plattform und die Optimierung der Betriebssysteme auf die Anforderung der jeweiligen Applikation wird eine besonders wirtschaftliche Realisierung erreicht, wobei in den Betriebssystemen nur diejenigen Funktionen realisiert sind, die für den Betrieb der jeweiligen Applikation erforderlich ist. Durch die Unabhängigkeit der Partitionen wird zusätzlich gegenüber der bekannten Software-Lösung für Applikationen ein hohe Verfügbarkeit der Applikationen erreicht.

Vorteilhafte Weiterbildungen des erfindungsgemäßen Verfahrens sowie erfindungsgemäße Ausgestaltungen einer prozessorgesteuerten Einrichtung sind den weiteren Patentansprüchen zu entnehmen.

Im Folgenden wird die Erfindung anhand einer zeichnerischen Darstellungen näher erläutert.

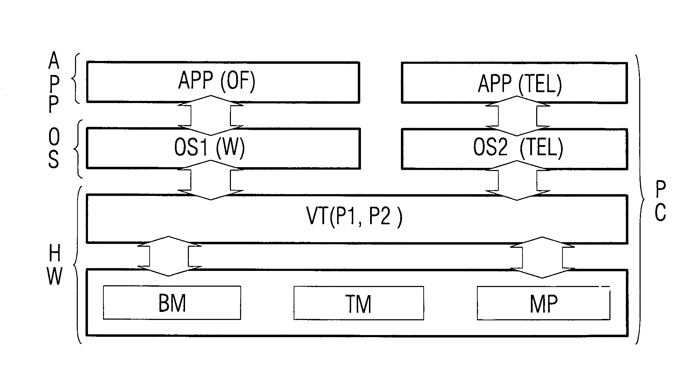

Die Figur zeigt in einem Blockschaltbild die Struktur einer erfindungsgemäß ausgestalteten prozessorgesteuerten Einrichtung bzw. einen Personalcomputers PC. Generell ist ein Personalcomputer PC in zwei wesentliche Bereiche unterteilt - die hardwarenahen bzw. die physikalischen Komponenten - in der Figur mit HW und im weiteren mit Hardware HW bezeichnet und die Software bzw. die Programme. Das Bindeglied zwischen Hardware HW und der Software stellt ein Betriebssystem OS dar. Bei einem Personalcomputer PC enthält die Hardware HW üblicherweise ein Mikroprozessorsystem MPS mit zumindest einen Mikroprozessor einschließlich der peripheren Komponenten wie Arbeitspeicher, Ein-Ausgabemodule usw. - in der Figur detailliert nicht dargestellt. Für einen Personalcomputer PC, der für mehrere Applikationen APP vorgesehen ist, ist ein Mikroprozessorsystem MPS mit zwei Mikroprozessoren, d.h. ein redundantes Mikroprozessorsystem MPS vorteilhaft.

Ein weiterer Teil der Hardware HW ist ein Bootmodul BM, mit dessen Hilfe ein Betriebssystem OS geladen werden kann. Die Hardware HW bzw. die physikalischen Komponenten des Personalcomputer PC umfassen weiterhin so genannte "Trusted Todules" TM, die im Wesentlichen die periphere Hardware wie Speicher oder Laufwerke oder Schnittstellenbaugruppen repräsentieren.

Die Hardware HW umfasst erfindungsgemäß zusätzlich eine durch ein Virtualisierungsmodul VT realisierte Virtualisierungstechnologie, mit der weitgehend unabhängige, virtuelle Partitionen P1,P2 in der Hardware HW eingerichtet werden können. Mit Hilfe der Virtualisierungstechnologie wird jedem der folgenden Betriebssysteme und Applikationen die Hardware HW derart emuliert, dass die Betriebssysteme OS nicht bemerken, dass die Hardware HW bzw. die physikalischen Ressourcen unter den Betriebssystemen OS aufgeteilt werden. Dies bedeutet, dass den Betriebssystemen OS die jeweiligen angeforderten Hardware- Ressourcen temporär zugeteilt werden, wobei die jeweiligen Anforderungen der jeweiligen Betriebssysteme OS isoliert ausgeführt werden und somit ein hohe Sicherheit und Verfügbarkeit erreicht wird. Die Virtualisierungstechnologie ist hardwarenah programmtechnisch realisiert und wird von unterschiedlichen Herstellern wie Intel, AMD usw. bereitgestellt.

In ein Virtualisierungsmodul VT können mehrere Betriebssysteme geladen werden. Für das Ausführungsbeispiel sei angenommen, dass zwei Betriebssysteme OS1,OS2 in das Virtualisierungsmodul VT geladen werden, wobei das erste Betriebssystem OS1 für eine Windows-Applikation APP(OF) und das zweite Betriebssystem OS2 für eine Telefonapplikation APP(TEL) konzipiert ist. Die Windows-Applikation APP(OF) stellt beispielsweise eine Officeapplikation OF dar, die beispielsweise gemäß Tabelle 1 folgende Subapplikationen enthält:

**Tabelle 1**

| Appliaktionen : | | |
|---|---|---|
| - | Browser e.g. Explorer | |
| - | Office application | |
| | - | Excel |
| | - | Word |
| | - | PowerPoint |
| | - | Access |
| | - | Acrobat Reader |
| | - | Netmeeting |
| | - | Outlook |
| - | Media (DVD/TV) Player SW | |
| - | Development environments | |
| - | Paint SW | |
| - | Picture SW (e.g. PhotoShop) | |
| - | Workgroup SW (SAP, Lotus Notes,...) | |
| - | IP Phone SW. | |

Die Telefonapplikation APP(TEL) ist im Personalcomputer PC beispielsweise für das Auf- und Abbauen von Telefonverbindungen über das Internet und das Steuern von Leistungsmerkmalen sowie das Führen von Gesprächen vorgesehen. Hierfür ist eine Hörgarnitur bzw. ein Mikrofon- und ein Lautsprecher - nicht dargestellt - vorgesehen, wobei diese Einrichtungen in die Hardware HW des Personalcomputers PC eingebunden sind. Für die Eingaben eines Benutzers für die Telefonapplikation APP(TEL) sind Eingabemodule vorzusehen.

Gemäß der Erfindung ist das jeweilige Betriebssystem OS1, OS2 hinsichtlich der verwendeten Applikation APP optimiert. Für das Windows-Applikation APP(WIN) sei beim Ausführungsbeispiel angenommen, dass ein bekanntes Betriebssystem OS Windows W der ersten Partition P1 zugeordnet ist. Das Betriebssystem OS Windows W ist für die Windows-Applikation APP(OF) Office O optimiert und weist gemäß Tabelle 2 folgende Funktionen auf:

**Tabelle 2**

| HW- Treiber: | | SW Middleware: | | |
|---|---|---|---|---|
| - | network | - | TCP/IP stack | |
| - | display (graphic cards) | - | netbios | |
| - | USB | - | IPX | |
| - | printer | - | video codec | |
| - | keyboard | - | audio codecs | |
| - | audio | | - | G.711 |
| - | tv tuner | | - | G.729 |
| - | V.24 driver | | - | G.726 |
| - | DVD/CD device | | - | AC3 |
| - | flash card driver | | - | MP3 |
| - | game controller | - | file & printer sharing | |
| | | | SW | |
| | | - | dial up SW | |
| | | - | fonts | |
| | | - | Filesystems | |
| | | | - | NTFS |
| | | | - | CDFS ISO9660 |
| | | | - | Samba |
| | | | - | EXT3 |
| | | | - | VFS |
| | | | - | FAT32(16) |
| | | - | encryption SW | |
| | | - | compression SW | |
| | | - | Virus Scanner | |
| | | - | backup SW | |
| | | - | .... | |

Erfindungsgemäß ist das zweite Betriebssystem OS2 auf die Telefonapplikation APP(TEL) optimiert, wobei beim Ausführungsbeispiel vorgesehen ist, die Telefonapplikation APP(TEL) der Applikation Office O zu benutzten - in der ersten Tabelle 1 mit IP Phone SW angedeutet. Weiterhin sei angenommen, das Betriebssystem Windows W für diese Applikation IP Phone SW zu optimieren ist. Dies bedeutet hinsichtlich der Telefonapplikation APP(TEL), dass der zweiten Partition P2 nur die IP Phone SW zugeordnet ist.

Nach einer Optimierung des Betriebssystems Windows W für die Telefonapplikation APP(TEL) IP Phone SW weist gemäß Tabelle 3 das zweite, optimierte Betriebssystem OS2 folgende Funktionen auf:

**Tabelle 3:**

| HW- Treiber: | | SW Middleware: | | |
|---|---|---|---|---|
| - | USB | - | TCP/IP stack | |
| - | keyboard | - | audio codecs | |
| - | audio | | - | G.711 |
| | | | - | G.729 |
| | | | - | G.726 |
| | | - | Filesystems | |
| | | | - | NTFS |

Wie aus Tabelle 3 ersichtlich, weist das zweite Betriebssystem OS2 lediglich die Funktionen auf, die für die Steuerung der Telefonapplikation APP(TEL) erforderlich sind. Im einzelnen sind dies Hardwaretreiber USB, Keybord, Audio für die physikalische Verbindung mit dem Mikrophon, dem Lautsprecher sowie der Eingabetastatur und die in der Hardware HW realisierte Middleware TCP/IP Stack, Audio Codecs G.711, G.729, G.726 und Dateisystem NTFS für die Steuerung der Anforderungen durch die Telefonapplikation (APP(TEL), die unterschiedlichen Komprimierungsstandards für die Sprachübertragung über das IP-Netz und das Bilden von Dateien.

Durch die Zuordnung der beiden Betriebssysteme OS1,OS2 zu unterschiedlichen Partitionen P1,P2 wird eine größtmögliche Unabhängigkeit der beiden jeweils zugeordneten Applikationen APP(OF,TEL) erreicht, wobei ein separates Aktivieren und Deaktivieren der jeweiligen Partitionen P1,P2 durch die jeweiligen Betriebssysteme OS1,OS2 möglich ist. Dies bedeutet, dass beispielsweise bei deaktivierter ersten Partition P1 das erste Betriebssystem OS1 sowie die Windows-Applikation APP(OF) in einen Zustand gesteuert werden, bei dem bei einer Aktivierung das erste Betriebssystem OS1 erst wieder hochgefahren werden muss. Ein wesentlicher Vorteil der Erfindung ist darin zu sehen, dass die Betriebssysteme OS1,OS2 auf die jeweilige Applikation APP optimiert wird. Hierzu wird entweder ein eigenes Betriebssystem OS optimal auf die Anforderung der jeweiligen Applikation konzipiert und entwickelt oder die Funktionen ein vorhandenes Betriebssystem werden optimiert, d.h. dessen Funktionen werden soweit reduziert und/oder durch zusätzliche Funktionen ergänzt, dass die Anforderungen der jeweiligen Applikation APP erfüllt werden. Hierdurch wird zum einen der Realisierungsaufwand reduziert und zum anderen werden die Ressourcen einer prozessorgesteuerten Einrichtung, beispielsweise des Personalcomputers PC optimal genutzt. Des Weiteren wird durch die Optimierung des jeweiligen Betriebssystems OS die Verarbeitungsgeschwindigkeit erhöht, da nicht optimierte Funktionen von Betriebsystemen OS nicht mitbearbeitet werden müssen. Die Betriebssysteme OS,OS2 können auch mit speziellen Schutzprogrammen ausgestattet werden, mit denen Angriffe aus Netzen - beispielsweise dem Internet - abgewehrt werden können - in der Fachwelt auch als gehärtete Betriebssysteme bekannt.

Die Erfindung ist nicht auf das Ausführungsbeispiel begrenzt, sondern kann in allen prozessorgesteuerten Systemen für unterhaltungs-, kommunikations- und computertechnische Einrichtungen eingesetzt werden, bei denen unterschiedliche Applikationen mit größter Unabhängigkeit voneinander bzw. geringster gegenseitiger Beeinflussung auf einer gemeinsamen Prozessorplattform betrieben werden sollen. Hierbei ist erfindungswesentlich, dass die Betriebssysteme auf die vorgesehenen Applikationen optimiert sind, um die vorhandenen Ressourcen optimal zu nutzen.

## Patentansprüche

1. Verfahren zum Implementieren von Applikationen (APP) in eine prozessorgesteuerte Einrichtung (PC),
- bei dem eine Prozessorplattform (HW) derart ausgestaltet wird, dass unabhängige Partitionen (P1,P2) eingerichtet werden können,
- bei dem einer Partition (P1,P2) ein Betriebssystem (OS1,OS2) und diesem zumindest eine Applikation (APP(OF,TEL)) zugeordnet ist, und
- bei dem das jeweilige Betriebssystem (OS1,OS2) hinsichtlich seines Funktionsumfangs für die jeweilige zumindest eine Applikation (APP(OF,TEL)) optimiert ist.

2. Verfahren nach Anspruch 1, **dadurch gekennzeichnet**,
die Applikationen (APP(OF,TEL)) durch unterhaltungs- oder telekommunikationsspezifische Applikationen realisiert sind.

3. Verfahren nach Anspruch 1 oder 2, **dadurch gekennzeichnet, dass** die Prozessorplattform (HW) für das Einrichten von Partitionen (P1,P2) eine Virtualisierungstechnologie für Prozessoren aufweist.

4. Verfahren nach einem der Anspruche 1 bis 3, **dadurch gekennzeichnet,**
**dass** die Betriebssysteme (OS1,OS2) derart optimiert sind, dass nur die für die jeweilige Applikation (APP(OF,TEL)) erforderlichen Funktionen für Anforderungen der jeweiligen Applikation (APP(OF,TEL)) an die physikalischen Komponenten der Prozessorplattform (HW) realisiert sind.

5. Verfahren nach Anspruch 4, **dadurch gekennzeichnet,**
**dass** die Optimierung eines Betriebssystem (OS1,OS2) in der Art durchgeführt wird, dass entweder ein Betriebssystem (OS1,OS2) optimal für die Anforderung der jeweiligen Applikation (APP(OF,TEL)) konzipiert ist oder die Funktionen eines vorhandenen Betriebssystems (OS1,OS2) in der Art optimiert sind, dass dessen Funktionen soweit reduziert werden und/oder durch zusätzliche Funktionen ergänzt sind, dass die Anforderungen der jeweiligen Applikation (APP(OF,TEL)) erfüllt werden.

6. Verfahren nach einem der Ansprüche 1 bis 5, **dadurch gekennzeichnet,**
**dass** für die Applikationen (APP(OF,TEL)) zusätzliche Komponenten in der in der Prozessorplattform (HW) vorgesehen sind, und
**dass** im Betriebssystem (OS1,OS2) und der Prozessorplattform (HW) zusätzliche Funktionen für zusätzlichen Komponenten vorgesehen sind.

7. Verfahren nach einem der Ansprüche 1 bis 6, **dadurch gekennzeichnet,**
**dass** eine Applikation (APP(OF,TEL)) einer Partition (P1,P2) über eine in der Prozessorplattform (HW) realisierte Schnittstelle mit einer Applikation (APP(OF,TEL)) einer weiteren Partition (P1,P2) kommuniziert.

8. Prozessorgesteuerte Einrichtung für das Implementieren von Applikationen,
- mit einer Prozessorplattform (HW) zum Einrichten von unabhängigen Partitionen (P1,P2),
- mit einem Betriebssystem (OS1,OS2) für eine Partition (P1,P2), der zumindest eine Applikation (APP(OF,TEL)) zugeordnet ist, und
- das Betriebssystem (OS1,OS2) derart ausgestaltet ist, dass es hinsichtlich seinen Funktionsumfangs für die jeweilige zumindest eine Applikation (APP(OF,TEL)) optimiert ist.

9. Prozessorgesteuerte Einrichtung nach Anspruch 8, **dadurch gekennzeichnet,**
**dass** als Applikationen (APP(OF,TEL)) unterhaltungs- oder telekommunikationsspezifische Applikationen programmtechnisch realisiert sind.

10. Prozessorgesteuerte Einrichtung nach Anspruch 8 oder 9,
**dadurch gekennzeichnet,**
**dass** die Betriebssysteme (OS1,OS2) derart optimiert sind, dass nur die für die jeweilige Applikation (APP(OF,TEL)) erforderlichen Funktionen für Anforderungen der jeweiligen Applikation (APP(OF,TEL)) an die physikalischen Komponenten der Prozessorplattform (HW) realisiert sind.

11. Prozessorgesteuerte Einrichtung nach einem der Ansprüche 8 bis 10, **dadurch gekennzeichnet,**
**dass** eine für das Einrichten von Partitionen (P1,P2) vorgesehene Virtualisierungstechnologie durch ein Virtualisierungsmodul (VT) realisiert ist.
